# EUROPÄISCHE PATENTSCHRIFT

(11) **EP 2 940 819 B1**
(45) Veröffentlichungstag und Bekanntmachung des Hinweises auf die Patenterteilung: **04.07.2018**
(21) Anmeldenummer: 15000867.0
(22) Anmeldetag: 24.03.2015
(51) Int. Cl.: H02G 15/02

(54) **KABELENDGARNITUR**
CABLE END FITTING
GARNITURE D'EXTRÉMITÉ DE CÂBLE

(30) Priorität: 24.04.2014 DE 102014105817; 14.07.2014 DE 202014103232 U
(43) Veröffentlichungstag der Anmeldung: 04.11.2015
(73) Patentinhaber: STRESCON GmbH, 73730 Esslingen (DE)
(72) Erfinder: Klein, Thomas, 73265 Dettingen unter Teck (DE); Wendt, Eckhard, 73257 Köngen (DE); Zühlke, Lutz, 73249 Wernau (DE); Zierhut, Stefan, 73730 Esslingen (DE)
(74) Vertreter: Völger, Karl Wolfgang

(56) Entgegenhaltungen:
- DE-A1- 2 726 403
- DE-A1- 3 611 462
- DE-A1- 3 935 360
- DE-A1- 4 224 673
- FR-A1- 2 980 622

## Beschreibung

Die Erfindung betrifft eine Kabelendgarnitur mit den Merkmalen des Oberbegriffs des Anspruches 1.

In der DE 39 35 360 A1 ist eine Kabelendgarnitur dieser Art als Bestandteil eines Kabelsteckers beschrieben. Das Kabel weist einen Leiter als Seele und mehrere Schichten von Kabelisolationen auf. Der Klemmkörper sitzt fest auf dem von den Kabelisolationen befreiten und vom Klemmkörper umschlossenen Endabschnitt des Leiters und trägt radial außen einen Kontaktkörper, wodurch sowohl die mechanische als auch die elektrische Verbindung zwischen Leiter und Kontaktkörper geschaffen wird. Am Klemmkörper stützt sich mittels eines Druckrings ein Steckerkonus ab. Der Kabelstecker kann in eine Steckbuchse gesteckt werden, wobei die mechanische Verbindung zwischen dem Steckerkonus und einem passenden Gegenkonus der Steckbuchse geschaffen und durch verschraubte Flansche gesichert wird, während die elektrische Verbindung zwischen dem Kontaktkörper und einer ihn radial umgebenden Kontaktbuchse der Steckbuchse geschaffen wird.

Da der Leiter radial kontaktiert wird, werden bei mehradrigen Leitern (segmentierten Leitern) die Isolationen im Endabschnitt entfernt, beispielsweise im Falle von Lack mittels geeigneter Lösungsmittel.

Die Kabelendgarnitur der DE 42 24 673 A1 ist als Steckbuchse ausgebildet, welche sich in radialer Richtung bezüglich des Leiters öffnet. Das von der Kabelisolation befreite Ende des Leiters ist mit Spiel in ein Sackloch eines metallischen Kontaktkörpers eingeführt und wird mit einer in radialer Richtung wirkenden Klemmschraube seitlich gegen die Wand des Sackloches im Kontaktkörper gedrückt.

Die DE 27 26 403 A1 offenbart ebenfalls eine als Steckbuchse ausgebildete Kabelendgarnitur, die sich in radialer Richtung bezüglich des Leiters öffnet. Auf das von der Kabelisolation befreite Ende des Leiters ist ein in axialer Richtung angeordneter Leiteranschlussbolzen aufgesetzt. Mit dem Leiteranschlussbolzen ist ein in radialer Richtung angeordneter Kontaktstift verschraubt, welcher wiederum in einen Aufnahmetrichter ragt.

In der DE 36 11 462 A1 sind Verbindungsgarnituren mit einer oder zwei Steckbuchsen beschrieben, in welche Kabelstecker einsteckbar sind. Der Kontaktkörper des Kabelsteckers liegt dann an der Wand des topf- oder rohrförmigen Steckbuchsenkörpers an.

Die FR 2 980 622 A1 beschreibt eine Muffe, bei welcher zwei zu verbindenden Leiter mit jeweils ihren Stirnseiten einen gemeinsamen, leitenden Kontaktkörper kontaktieren.

Der Erfindung liegt die Aufgabe zu Grunde, eine Kabelendgarnitur der eingangs genannten Art zu verbessern. Diese Aufgabe wird erfindungsgemäß durch eine Kabelendgarnitur mit den Merkmalen des Anspruches 1 gelöst. Vorteilhafte Ausgestaltungen sind Gegenstand der Unteransprüche.

Die Erfindung eignet sich besonders für segmentierte Leiter mit einzeln isolierten Adern, kann aber auch für andere Leiter verwendet werden. Indem die Adern des Leiters an ihrer (in axialer Richtung weisenden) Stirnseite kontaktiert werden, brauchen die Adern nicht von ihrer Einzelisolation befreit werden. Dies vereinfacht die Montage der Kabelendgarnitur auf dem Kabel. Mechanisch ist die Kabelendgarnitur weiterhin in radialer Richtung am Leiter befestigt.

Die Kontaktierung des Kontaktkörpers mit den in axialer Richtung weisenden Stirnseiten der Adern des Leiters erfolgt mittels eines Kontaktmittels, welches zwischen dem Kontaktkörper und den Stirnseiten der Adern des Leiters angeordnet ist, also (lose) eingelegt oder eingefüllt ist. Das elektrisch leitfähige Kontaktmittel bildet also das Mittel zur Herstellung einer elektrischen Verbindung zwischen Leiter und Kontaktkörper. Das Kontaktmittel kann ein einzelnes Element, eine einheitliche Baugruppe oder erfindungsgemäß eine Gesamtheit von Kugeln sein. Es kann aus einem weicheren Material als die Adern des Leiters besteht, so dass ein Längenausgleich geschaffen werden kann. Die mechanische Verbindung zwischen Klemmkörper und Kontaktkörper erzeugt den nötigen Anpressdruck für die elektrische Verbindung zwischen den Adern des Leiters und dem Kontaktmittel sowie zwischen dem Kontaktmittel und dem Kontaktkörper. Von den Verformungen zum Längenausgleich abgesehen, ist das Kontaktmittel weiterhin unverbunden mit dem Kontaktkörper und mit den Adern des Leiters, also nicht stoffschlüssig verbunden.

Der Klemmkörper umschließt den von der Kabelisolation befreiten Endabschnitt des Leiters radial und ist (radial außen) auf besagtem Endabschnitt des Leiters befestigt. Er kann mittels eines Presskonus oder als Schraubklemme ausgebildet auf dem Leiter befestigt werden. An dem so befestigten Klemmkörper stützt sich der Kontaktkörper ab. Durch bevorzugtes Verschrauben von Klemmkörper und Kontaktkörper (d.h. Gewindeabschnitte bilden das Mittel zur Herstellung einer mechanischen Verbindung zwischen Klemmkörper und Kontaktkörper) wird der Anpressdruck erzeugt, den der Kontaktkörper in axialer Richtung auf die Stirnseiten der Adern des Leiters ausübt. Im Falle des Presskonus bewegt sich aufgrund des Verschraubens der Klemmkörpers relativ zum Presskonus, was in radialer Richtung den Anpressdruck des Presskonus auf den Leiter erzeugt. Der Leiter besteht aus mehreren gegeneinander isolierten Adern. Der Klemmkörper verhindert ein Ausweichen der Adern des Leiters in radialer Richtung bei der Befestigung der Kabelendgarnitur am Kabel.

Die Kabelendgarnitur kann Bestandteil eines Kabelsteckers sein. Der Kontaktkörper ist hinsichtlich Kontaktabschnitt und Gewindeabschnitt vorzugsweise einstückig ausgebildet und weist vorzugsweise Materialpartien zum Ansetzen eines Werkzeugs für die Verschraubung auf. Die Kabelendgarnitur kann auch Bestandteil einer Muffe zum Verbinden zweier Kabel sein. Der Kontaktkörper ist vorzugsweise einfach vorhanden, alle anderen Bauteile doppelt. Der dem Kontaktkörper zugeordnete Gewindeabschnitt ist vorzugsweise auf einer Überwurfmutter ausgebildet.

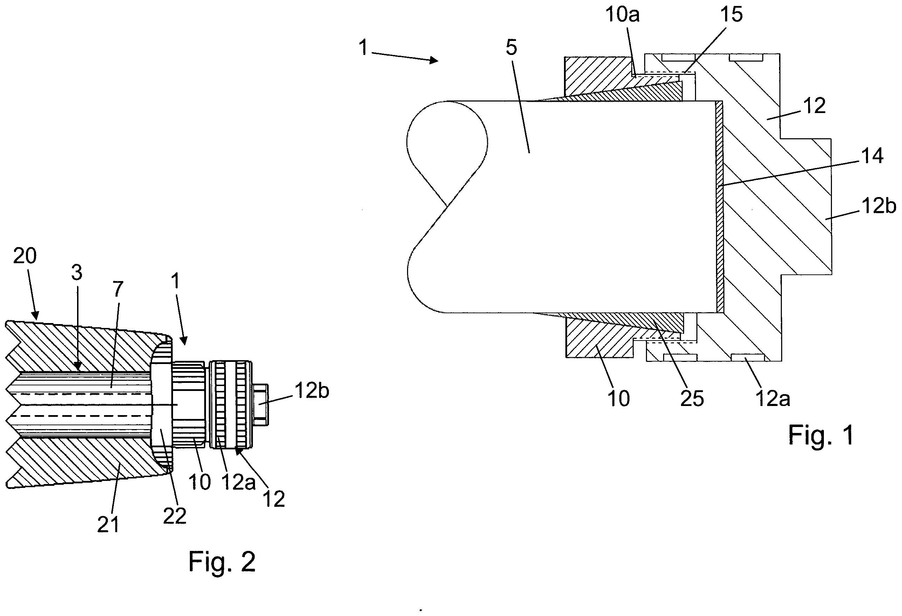

Im Folgenden ist die Erfindung anhand von sieben in der Zeichnung dargestellten Ausführungsbeispielen näher erläutert. Das Kontaktmittel ist beim ersten bis sechsten Ausführungsbeispiel nur schematisch dargestellt. Es zeigen
- Fig. 1: einen Schnitt durch das erste Ausführungsbeispiel,
- Fig. 2: einen teilweise geschnitten dargestellten Kabelstecker,

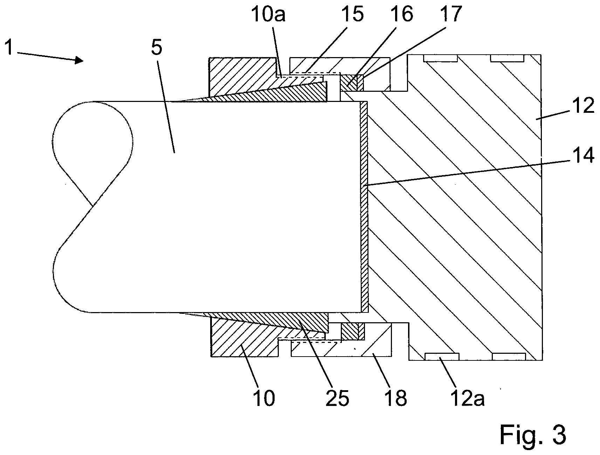

- Fig. 3: einen Schnitt durch das zweite Ausführungsbeispiel,

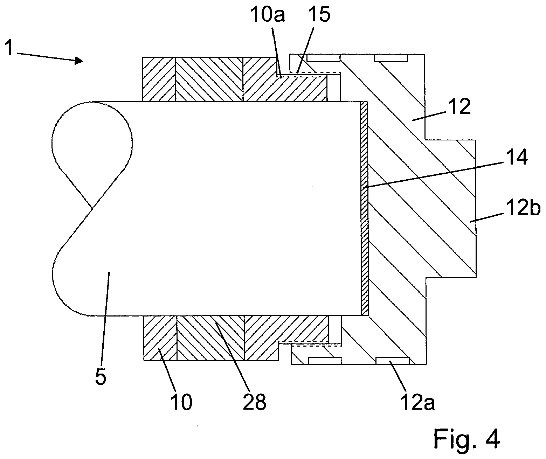

- Fig. 4: einen Schnitt durch das dritte Ausführungsbeispiel,

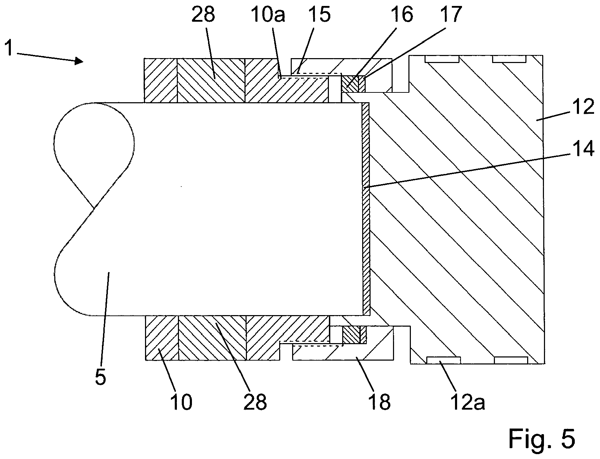

- Fig. 5: einen Schnitt durch das vierte Ausführungsbeispiel,

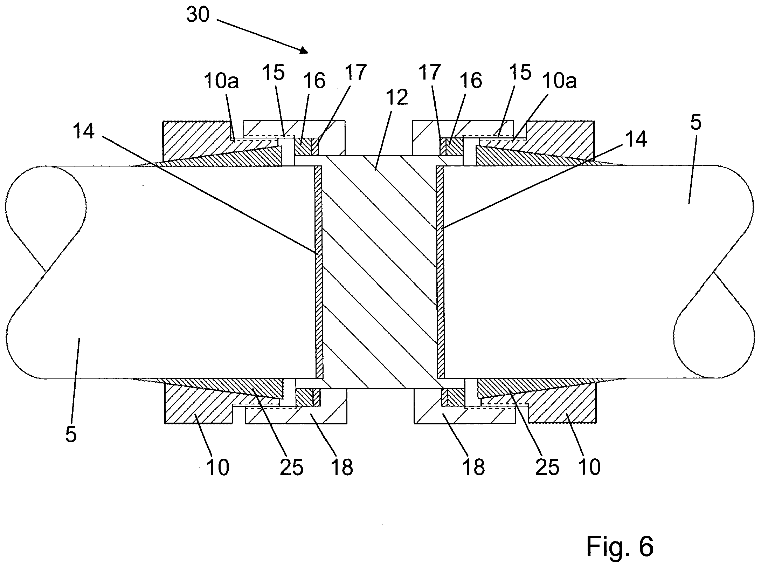

- Fig. 6: einen Schnitt durch das fünfte Ausführungsbeispiel,

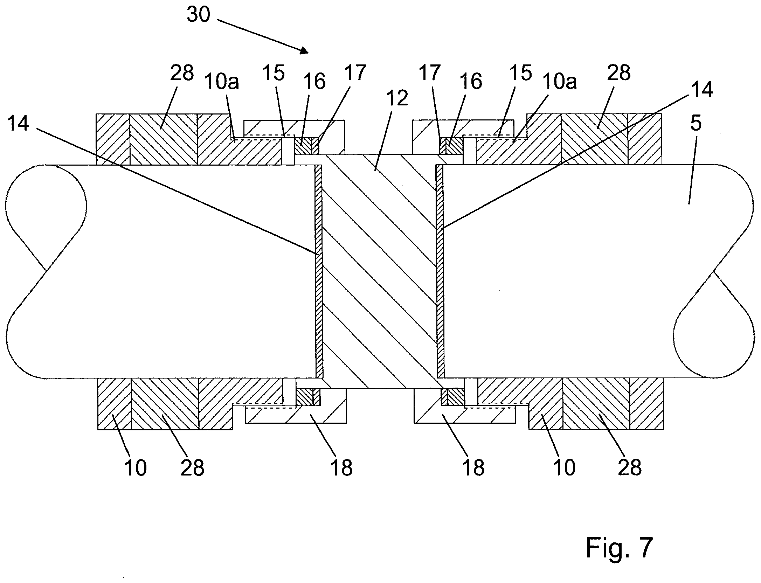

- Fig. 7: einen Schnitt durch das sechste Ausführungsbeispiel,
- Fig. 8: eine Studie für ein Kontaktmittel mit ausgestellten Federzungen,
- Fig. 9: eine Studie für ein Kontaktmittel mit Zähnen,
- Fig. 10: eine Studie für ein Kontaktmittel als eine spiralförmig und mit Abstandshaltern gelegte Schraubenfeder, und
- Fig. 11: einen Schnitt durch das siebte Ausführungsbeispiel, welches auch die Bohrungen zum Einfüllen des erfindungsgemäßen Kontaktmittels zeigt.

Eine Kabelendgarnitur 1 ist am Ende eines Kabels 3 vorgesehen, welches im Betrieb eine Mittelspannung oder Hochspannung führt. Die Zylindersymmetrie des Kabels 3 definiert die vorliegend verwendeten Richtungsangaben. Das Kabel 3 weist einen (in axialer Richtung verlaufenden) Leiter 5 als Seele und wenigstens eine Kabelisolierung 7 auf, welche den Leiter 5 (in radialer Richtung) umschließt. In der Regel sind mehrere Schichten von Kabelisolierungen vorgesehen, die einander unter Zwischenlage von leitenden Schichten als Abschirmung umschließen. Der Leiter 5 besteht aus mehreren gegeneinander isolierten Adern, die für die Formstabilität in der Regel miteinander verdrillt sind. Bei höheren Frequenzen übernimmt jeder Ader vornehmlich die Randschicht die Stromleitung. Insgesamt wird jedoch ein deutlich größer Teil der Gesamt-Querschnittsfläche ausgenutzt als dies bei einem einadrigen Kabel mit gleicher Gesamt-Querschnittsfläche der Fall wäre. Der Durchmesser des Leiters 5 beträgt beispielsweise 62 mm, die innerste Schicht der Kabelisolierung 7 ist beispielsweise 15 mm stark.

Der Endabschnitt des Leiters 5 ist von der Kabelisolierung 7 befreit. Die Kabelendgarnitur 1 weist einen Klemmkörper 10 auf, welcher in einer später genauer beschriebenen Weise auf besagtem Endabschnitt des Leiters 5 befestigt ist. Der Klemmkörper 10 umschließt den Leiter 5 in radialer Richtung. Er ist von der Stirnseite des Leiters 5 beabstandet angeordnet. Der Außendurchmesser des Klemmkörpers 10 beträgt beispielsweise 88 mm, d.h. weniger als der Leiter 5 mit Kabelisolierung 7. Mittels des Klemmkörpers 10 sind das Kabel 3 und die Kabelendgarnitur 1 mechanisch (fest) verbunden. Zudem verhindert der Klemmkörper 10 ein Ausweichen der Adern des Leiters 5 in radialer Richtung bei der Befestigung der Kabelendgarnitur 1.

Die Kabelendgarnitur 1 weist ferner einen Kontaktkörper 12 auf, welcher einerseits mechanisch mit dem Klemmkörper 10 und andererseits elektrisch mit dem Leiter 5 verbunden ist. Die elektrische Verbindung zwischen Kontaktkörper 12 und Leiter 5 könnte ein unmittelbarer Kontakt sein. Jedoch erfolgt die elektrische Verbindung vorzugsweise mittelbar durch Zwischenlage eines flachen Kontaktmittels 14. Der Kontaktkörper 12 weist auf der dem Leiter 5 zugewandten Seite eine Aufnahme für das Kontaktmittel 14 auf. Das Kontaktmittel 14 weist den gleichen Außenquerschnitt wie der Leiter 5 auf, d.h. vorliegend kreisförmig mit gleichem Durchmesser, der zudem mit dem Innenquerschnitt der Aufnahme (in welcher das Kontaktmittel 14 angeordnet ist) übereinstimmt, jeweils im Rahmen der Fertigungstoleranzen.

Um einen elektrischen Kontakt zwischen Leiter 5 und Kontaktkörper 12 zu schaffen, kontaktiert das Kontaktmittel 14 einerseits den Kontaktkörper 12 und andererseits die blanken Stirnseiten aller Adern des Leiters 5, d.h. der Kontaktkörper 12 kontaktiert die in axialer Richtung weisenden Stirnseiten der Adern des Leiters 5 mittels des Kontaktmittels 14. Die mechanische Verbindung zwischen Klemmkörper 10 und Kontaktkörper 12 erzeugt den nötigen Anpressdruck für die elektrische Verbindung zwischen den Adern des Leiters 5 und dem Kontaktmittel 14 sowie zwischen dem Kontaktmittel 14 und dem Kontaktkörper 12.

Es sind verschiedene Ausführungen des Kontaktmittels 14 denkbar. In einer einfach herzustellenden Ausführung ist das Kontaktmittel 14 als weiches Blech in Scheibenform ausgebildet, d.h. aus einem weicheren Material als der Kontaktkörper 12. Die harten Adern des Leiters 5 können sich in das weiche Kontaktmittel 14 eingraben. Dies ermöglicht einen Längenausgleich, d.h. verschiedene Adern des Leiters 5 können sich verschieden tief in das Kontaktmittel 14 eingraben.

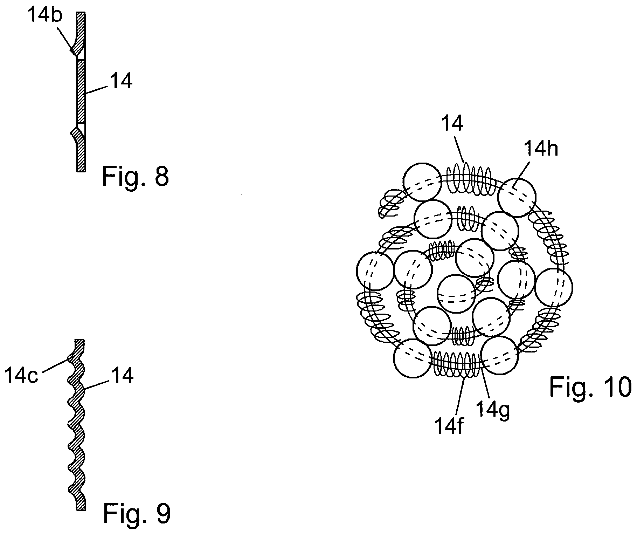

In einer anderen Ausführung (Fig. 8) ist das Kontaktmittel 14 in Scheibenform aus Federblech mit ausgestellten Federzungen 14b ausgebildet. Die Federzungen 14b können beispielsweise teilweise ausgestanzt und aus der Scheibenebene heraus gebogen sein. Die ausgestellten Federzungen 14b kontaktieren einzelne Adern des Leiters 5, so dass ebenfalls ein Längenausgleich möglich ist.

In einer weiteren Ausführung (Fig. 9) ist das Kontaktmittel 14 in Scheibenform mit ausgestellten Noppen oder Zähnen 14c ausgebildet, die beispielsweise aus der Scheibenebene heraus gedrückt sind. Auch hier erfolgt ein Längenausgleich mittels einer Einzelkontaktierung der Adern des Leiters 5. Mittels der auf der anderen Stirnseite des Kontaktmittels 14 entstehenden Rillen oder dergleichen kann der elektrische Kontakt zum Kontaktkörper 12 als Linienkontakt ausgebildet sein, was auch bei den anderen Ausführungen möglich ist.

In einer vierten Ausführung (Fig. 10) ist das Kontaktmittel 14 in der Art einer federgestützten Dichtung ausgebildet. Dabei ist eine Schraubenfeder 14f (oder mehrere Schraubenfedern) als Spirale in einer Ebene gelegt, vorzugsweise entlang eines Trägerdrahtes, auf welchen Abstandshalter 14k gefädelt sind, beispielsweise Kugeln. Die Abstandhalter wechseln entlang des Trägerdrahtes mit Abschnitten einer einzigen Schraubenfeder oder mit einzelnen Schraubenfedern ab. Die Windungen der Schraubenfeder stellen den elektrischen Kontakt her, die zwischen den Spiralabschnitten des Trägerdrahtes wirksamen Abstandhalter sorgen für die Formstabilität des Kontaktmittels 14.

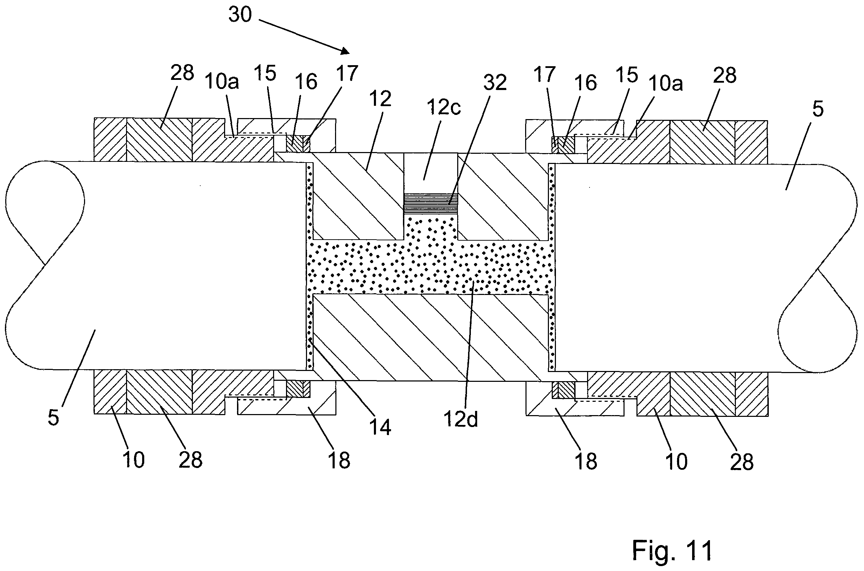

Eine fünfte Ausführung (Fig. 11) des Kontaktmittels 14 ist später beschrieben.

Die mechanische Verbindung zwischen Klemmkörper 10 und Kontaktkörper 12 ist vorzugsweise eine Schraubverbindung. Der Klemmkörper 10 weist auf der dem Kontaktkörper 12 zugewandten Seite einen ersten Gewindeabschnitt 10a auf. Der erste Gewindeabschnitt 10a ist zwischen der Stirnseite des Klemmkörpers 10 und einer radialen Stufe des Klemmkörpers 10 als Außengewinde eines zylindrischen Endabschnitts des Klemmkörpers 10 ausgebildet. Dem Kontaktkörper 12 ist ein zweiter Gewindeabschnitt 15 zugeordnet, welcher als Innenwinde eines Topfes ausgebildet ist. Der dem Klemmkörper 10 zugeordnete erste Gewindeabschnitt 10a und der dem Kontaktkörper 12 zugeordnete zweite Gewindeabschnitte 15 sind miteinander verschraubbar.

Insoweit gleichen sich alle Ausführungsbeispiele.

Hinsichtlich des zweiten Gewindeabschnitts 15 gibt es zwei bevorzugte Bauarten. In einer ersten Bauart ist der mit dem ersten Gewindeabschnitt 10a des Klemmkörpers 10 zusammenwirkende zweite Gewindeabschnitt 15 direkt am Kontaktkörper 12 einstückig mit diesem ausgebildet, vorzugsweise an einem topf- oder glockenartigen Vorsprung.

In der zweiten Bauart ist der zweite Gewindeabschnitt 15 an einem separaten Bauteil ausgebildet, wie nachfolgend beschrieben. Auf der (radialen) Außenseite des Kontaktkörpers 12 ist an dessen dem Leiter 5 zugewandten (axialen) Ende ein Befestigungsring 16 befestigt, vorzugsweise auf den Kontaktkörper 12 mittels einer geeigneten Schraubverbindung aufgeschraubt. Unter Zwischenlage je eines Federrings 17 (ohne einer elastischen Scheibe) ist benachbart zum Befestigungsring 16 eine Überwurfmutter 18 (radial außen) auf dem Kontaktkörper 12 angeordnet. Die Überwurfmutter 18 ist drehbar auf dem Kontaktkörper 12 gelagert. Ferner ist die Überwurfmutter 18 verliersicher angeordnet, d.h. mit der bauarttypischen, radial nach innen ragenden Materialpartie hintergreift die Überwurfmutter 18 die zugeordnet Anordnung von Befestigungsring 16 und Federring 17. Die Überwurfmutter 18 kann auf ihrer Außenseite einen Mehrkant oder dergleichen zum Ansetzen eines Werkzeugs aufweisen.

Auf ihrer Innenseite weist die Überwurfmutter 18 den zweiten Gewindeabschnitt 15 auf, d.h. der zweite Gewindeabschnitt 15 ist an der Überwurfmutter 18 einstückig mit dieser ausgebildet. Diese zweite Bauart vermeidet eine Relativdrehung von Leiter 5 und Kontaktkörper 12 beim Verschrauben des Klemmkörpers 10 und des zweiten Gewindeabschnitts 15. Vorzugsweise sind der zweite Gewindeabschnitt 15 und das Gewinde im Befestigungsring 16 (für die Schraubverbindung mit dem Kontaktkörper 12) gegensinnig ausgebildet, beispielsweise der zweite Gewindeabschnitt 15 als Rechtsgewinde und der Befestigungsring 16 mit einem Linksgewinde. Dies verhindert ein Lösen des Befestigungsrings 16 beim Anziehen der Überwurfmutter 18.

Bei den nachfolgenden Ausführungsbeispielen können beide Bauarten verwendet werden.

Die Kabelendgarnitur 1 kann Bestandteil eines Freiluft-Endverschlusses sein, wie er bei Freiluftleitungen Anwendung findet.

Die Kabelendgarnitur 1 kann Bestandteil eines Kabelsteckers 20 sein, wie in dem ersten bis vierten Ausführungsbeispiel verwirklicht. Der Kabelstecker20 weist einen Steckerkonus 21 auf, dessen Kegelwinkel den bei bekannten Kabelsteckern üblichen Wert hat. Der aus einem Isolator bestehende Steckerkonus 21 ist in an sich bekannter Weise auf die Kabelisolation 7 geschoben, wobei vorzugsweise die äußerste von mehreren Isolationsschichten teilweise entfernt ist. Der Steckerkonus 21 verjüngt sich zum Klemmkörper 10 hin, wobei vorzugsweise zwischen dem Klemmkörper 10 und dem Steckerkonus 21 ein elektrisch leitender Druckring 22 vorgesehen ist, welcher den Steckerkonus 21 an seiner Position (zusätzlich) sichert. Der Druckring 22 wirkt in axialer Richtung, entweder zur Übertragung einer Druckkraft, oder er übt selber eine Druckkraft in beide axiale Richtungen aus, beispielsweise als Folge einer radial auf ihn einwirkenden Druckkraft.

Für die Funktion des Kabelsteckers 20 gemäß dem ersten bis vierten Ausführungsbeispiel weist der Kontaktkörper 12 einen radial nach außen weisenden Kontaktabschnitt 12a auf, vorzugsweise einen Viellinienkontakt (Lamellenkontakt), wie er an sich bekannt ist. Der Kontaktabschnitt 12a ist vorzugsweise direkt am Kontaktkörper 12 einstückig mit diesem ausgebildet, kann aber auch ein separates Bauteil sein. Der Außendurchmesser des Kontaktabschnitts 12a (und damit des gesamten Kontaktkörpers 12) beträgt beispielsweise 90 mm, d.h. mehr als der Außendurchmesser des Klemmkörpers 10. Um das Werkzeug zum Aufschrauben des Kontaktkörpers 12 auf den Klemmkörper 10 anzusetzen, weist der Kontaktkörper 12 auf seiner vom Klemmkörper 10 abgewandten Stirnseite vorzugsweise einen Mehrkant 12b auf, beispielsweise einen Sechskant, der vorzugsweise ebenfalls direkt am Kontaktkörper 12 einstückig mit diesem ausgebildet ist. Alternativ zu einem als Materialvorsprung ausgebildeten Mehrkant 12b kann eine profilierte Vertiefung als Mehrkant 12b vorgesehen sein, beispielsweise ein Innensechskant. Mit der Herstellung der Schraubverbindung wird der elektrische Kontakt zwischen den Stirnseiten der Adern des Leiters 5 und dem Kontaktkörper 12 unter Zwischenlage des Kontaktmittels 14 hergestellt.

Der Kabelstecker 20 wird in an sich bekannter Weise in eine Steckbuchse gesteckt, welche einen Trichter mit Gegenkonus zur Aufnahme des Steckerkonus 21 und eine Kontaktbuchse am Schlund des Trichters aufweist. Die Kontaktbuchse, welche beispielsweise einen Innendurchmesser von 90 mm aufweist, nimmt den Endabschnitt des Kabelsteckers 20 mit Klemmkörper 10 und Kontaktkörper 12 auf und stellt einen elektrischen Kontakt zum Kontaktabschnitt 12a her.

Insoweit gleichen sich das erste bis vierte Ausführungsbeispiel.

Im ersten und zweiten Ausführungsbeispiel ist der Klemmkörper 10 mittels eines Presskonus 25 am Leiter 5 befestigt. Der Presskonus 25 ist axial geschlitzt und sitzt auf dem Leiter 5 in einem Abstand von dessen Stirnseite. Der Abstand ist größer als die Tiefe der im Kontaktkörper 12 vorgesehenen Aufnahme für das Kontaktmittel 14. Der Presskonus 25 verjüngt sich von dem dem Kontaktkörper 12 zugewandten Ende zu dem der Kabelisolierung 7 zugewandten Ende. Der Klemmkörper 10 weist einen passenden Gegenkonus auf, dessen Innendurchmesser von dem der Kabelisolierung 7 zugewandten Ende zu dem dem Kontaktkörper 12 zugewandten Ende hin anwächst.

Zur Montage sitzt der Klemmkörper 10 zunächst näher an der Kabelisolierung 7. Der Kontaktkörper 12 wird (mit eingelegtem Kontaktmittel 14) angesetzt, so dass die beiden Gewindeabschnitte 10a, 15 anschnäbeln. Durch eine Drehbewegung (infolge eines Drehmomentes auf den Mehrkant 12b) wird den Kontaktkörper 12 auf den Klemmkörper 10 aufgeschraubt. Der Klemmkörper 10 bewegt sich relativ zum Presskonus 25 auf den Kontaktkörper 12 zu und wird dabei auf den Presskonus 25 gezogen. Dabei wird die axial wirkende Kraft durch die Konusflächen in eine radiale Kraft umgesetzt, welche den Presskonus 25 gegen den Leiter 5 presst (und damit den Klemmkörper 10 am Leiter 5 befestigt). Die im Presskonus 25 vorgesehenen axialen Schlitze erlauben, dass die mittels der Schlitze voneinander getrennten Materialpartien sich einander (in Umfangsrichtung) annähern, während der Presskonus 25 auf den Leiter 5 gepresst wird (und dabei zugleich den Leiter 5 verdichtet). Mit dem Aufschrauben werden zugleich die Stirnseite der Adern des Leiters 5 gegen das Kontaktmittel 14 gepresst.

Im ersten Ausführungsbeispiel ist der zweite Gewindeabschnitt 15 gemäß der ersten Bauart am Kontaktmittel 14 ausgebildet, im zweiten Ausführungsbeispiel gemäß der zweiten Bauart an einer Überwurfmutter 18. Gemäß dem ersten Ausführungsbeispiel beträgt die axiale Länge des Kontaktkörpers 12 ohne Mehrkant 12b beispielsweise 40 mm, diejenige des Klemmkörpers 10 ohne den ersten Gewindeabschnitt 10a beispielsweise 20 mm. Im aufgeschraubten Zustand weisen Klemmkörper 10 und Kontaktkörper 12 (ohne Mehrkant 12b) beispielsweise eine gesamte axiale Länge von 64 mm auf.

Im dritten und vierten Ausführungsbeispiel ist der Klemmkörper 10 als Schraubklemme ausgebildet. D.h., der Klemmkörper 10 ist mittels wenigstens einer Schraube 28 (oder eines gleichwirkenden Befestigungsmittels) am Leiter 5 befestigt. Der Klemmkörper 10 weist für jede vorgesehene Schraube 28 eine in radialer Richtung ausgerichtete Gewindeöffnung auf. Zur Montage werden die vorgesehenen Schrauben 28 in diese Gewindeöffnungen und gegen den Leiter 5 geschraubt, bis der Klemmkörper 10 auf den Leiter 5 geklemmt ist.

Im dritten Ausführungsbeispiel ist der zweite Gewindeabschnitt 15 gemäß der ersten Bauart am Kontaktmittel 14 ausgebildet, im vierten Ausführungsbeispiel gemäß der zweiten Bauart an einer Überwurfmutter 18. Gemäß dem dritten Ausführungsbeispiel beträgt die axiale Länge des Kontaktkörpers 12 ohne Mehrkant 12b beispielsweise 40 mm, diejenige des Klemmkörpers 10 ebenfalls beispielsweise 40 mm. Im aufgeschraubten Zustand weisen Klemmkörper 10 und Kontaktkörper 12 (ohne Mehrkant 12b) beispielsweise eine gesamte axiale Länge von 84 mm auf.

Die Kabelendgarnitur 1 ist nicht auf die Verwendung in einem Kabelstecker 20 oder einem Freiluft-Endverschluss beschränkt. Die Kabelendgarnitur 1 kann (doppelter) Bestandteil einer Muffe 30 zur Verbindung zweier Kabel 3 sein, wie in dem fünften, sechsten und siebten Ausführungsbeispiel verwirklicht.

Der bolzenartig ausgebildete Kontaktkörper 12 weist an beiden Stirnseite eine Aufnahme für je ein Kontaktmittel 14 auf. Gemäß der zweiten Bauart ist an beiden (axialen) Enden des Kontaktkörpers 12 jeweils eine Überwurfmutter 18 angeordnet. Die beiden Überwurfmuttern 18 öffnen sich in entgegengesetzte Richtungen. Die beiden Überwurfmuttern 18 können jeweils einen Mehrkant aufweisen, beispielsweise einen Sechskant, wobei derartige Mehrkante vorzugsweise jeweils an den einander zugewandten Enden der Überwurfmuttern ausgebildet sind. Für jedes der durch die Muffe 30 zu verbindenden Kabel 3 ist an jedem Leiter 5 jeweils ein Klemmkörper 10 befestigt, welcher einen ersten Gewindeabschnitt 10a aufweist. Entsprechend zum zweiten und vierten Ausführungsbeispiel ist jeder der beiden Klemmkörper 10 mittels jeweils einer der beiden Überwurfmuttern 18 mit dem Kontaktkörper 12 verschraubbar. Sofern ein Mehrkant an einer solchen Überwurfmutter 18 ausgebildet ist, dient er zum Ansetzen eines Werkzeugs und zum Aufbringen des Drehmoments. Mit der Herstellung der Schraubverbindung wird der elektrische Kontakt zwischen den Stirnseiten der Adern des Leiters 5 und dem Kontaktkörper 12 unter Zwischenlage des Kontaktmittels 14 hergestellt.

Bei einem Durchmesser des Leiters 5 von beispielsweise 44 mm beträgt der Außendurchmesser des ersten Gewindeabschnitts 10a beispielsweise 62 mm, derjenige des Klemmkörpers 10 beispielsweise 74 mm.

Insoweit gleichen sich das fünfte, das sechste und das siebte Ausführungsbeispiel.

Im fünften Ausführungsbeispiel ist jeder Klemmkörper 10 mittels eines Presskonus 25 am zugeordneten Leiter 5 befestigt. Der Presskonus 25 ist wie der Presskonus 25 des ersten Ausführungsbeispiels ausgebildet und wirkt in der gleichen Weise mit dem zugeordneten Klemmkörper 10 und dem zugeordneten Leiter 5 zusammen.

Die axiale Länge des Kontaktkörpers 12 beträgt beispielsweise 50 mm, diejenige des Klemmkörpers 10 ohne den ersten Gewindeabschnitt 10a beispielsweise 20 mm. Im aufgeschraubten Zustand weisen die beiden Klemmkörper 10 und der Kontaktkörper 12 beispielsweise eine gesamte axiale Länge von 128 mm auf.

Im sechsten und siebten Ausführungsbeispiel ist jeder Klemmkörper 10 als Schraubklemme ausgebildet. Der Klemmkörper 10 ist dabei wie der Klemmkörper 10 des zweiten Ausführungsbeispiels ausgebildet und wirkt in der gleichen Weise mit dem zugeordneten Leiter 5 zusammen. D.h., jeder Klemmkörper 10 ist mittels wenigstens einer Schraube 28 (oder eines gleichwirkenden Befestigungsmittels) am zugeordnete Leiter 5 befestigt.

Die axiale Länge des Klemmkörpers 10 beträgt ohne den ersten Gewindeabschnitt 10a beispielsweise 40 mm, mit erstem Gewindeabschnitt 10a beispielsweise 56 mm. Beim sechsten Ausführungsbeispiel beträgt die axiale Länge des Kontaktkörpers 12 beispielsweise 50 mm, und im montierten Zustand weisen die beiden Klemmkörper 10 und der Kontaktkörper 12 beispielsweise eine gesamte axiale Länge von 168 mm auf. Beim siebten Ausführungsbeispiel beträgt die axiale Länge des Kontaktkörpers 12 beispielsweise 78 mm, die beiden Befestigungsringe 16 sind beispielsweise um 4 mm zur jeweiligen Stirnfläche des Kontaktkörpers 12 versetzt, und im aufgeschraubten Zustand weisen die beiden Klemmkörper 10 und der Kontaktkörper 12 beispielsweise eine gesamte axiale Länge von 190 mm auf. Die Überwurfmuttern 18 sind dann beispielsweise 22 mm voneinander beabstandet.

In einer Abwandlung zum fünften, sechsten und siebten Ausführungsbeispiel hätte die Muffe 30 auf einer Seite einen Klemmkörper 10 mit einem Presskonus 25 und auf der anderen Seite einen als Schraubklemme ausgebildeten Klemmkörper 10. Es könnten in Abwandlungen des fünften und sechsten Ausführungsbeispiels anstelle der Überwurfmuttern 18 zwei Kontaktkörper verwendet werden, ähnlich den Kontaktkörpern des ersten bis vierten Ausführungsbeispiels, welche mittels eines Spannschlosses (d.h. einmal mit Rechtsgewinde und einmal mit Linksgewinde) miteinander verschraubt werden. Ebenso könnten in Abwandlungen des fünften und sechsten Ausführungsbeispiels die beiden Überwurfmuttern fest miteinander verbunden sein, um ein Spannschloss zu bilden.

Bei den bisher beschriebenen Ausführungsbeispielen samt Abwandlungen ist das Kontaktmittel 14 als ein einzelnes Element oder eine einheitliche Baugruppe dargestellt. Im Unterschied dazu ist beim siebten Ausführungsbeispiel (Fig. 11) dargestellt, dass das Kontaktmittel 14 eine Gesamtheit von elektrisch leitfähigen Kugeln ist, welche in den Kontaktkörper 12 und durch diesen hindurch einfüllbar ist, um - vorliegend auf beiden Seiten des Kontaktkörpers 12 - den flachen Zwischenraum zwischen dem Boden der Aufnahme des Kontaktkörpers 12 und der Stirnseite des Leiters 5 auszufüllen. Dieses Kontaktmittel 14 verhält sich ähnlich wie eine elektrisch leitende Flüssigkeit, ist aber - im Gegensatz zu Quecksilber - nicht giftig. Als Kontaktmittel 14 geeignet sind beispielsweise kleine, massive Kupferkugeln.

Um das Kontaktmittel 14 einzufüllen, d.h. an seinen Bestimmungsort zu bringen, weist der Kontaktkörper 12 (auf halber Länge) eine Querbohrung 12c auf, die sich von der Außenseite des Kontaktkörpers 12 in radialer Richtung bis zur Mittelachse des (zylindersymmetrischen) Kontaktkörpers 12 erstreckt, sowie eine Längsbohrung 12d, die sich in axialer Richtung entlang der Mittelachse des Kontaktkörpers 12 erstreckt. Zum Verschließen der Querbohrung 12 c ist ein Verschluss 32 vorgesehen. Der Verschluss 32 ist beispielsweise als Schraube ausgebildet, welche in ein Innengewinde der Querbohrung 12c eingeschraubt werden kann (allerdings höchstens bis zum Rand der Längsbohrung 12d).

Bei der Montage werden die Überwurfmuttern 18 nur soweit auf den jeweiligen Klemmkörper 10 aufgeschraubt, bis zwischen der Stirnseite des Leiters 5 und dem Kontaktkörper 12 der gewünschte Abstand vorhanden ist, also der besagte Zwischenraum das gewünschte Volumen aufweist. Dann wird (vorzugsweise unter Druck) das Kontaktmittel 14 an der Querbohrung 12c in den Kontaktkörper 12 eingefüllt, so dass es sich über die Längsbohrung 12d verteilt und schließlich den besagten Zwischenraum ausfüllt. Nun wird die Querbohrung 12c mit dem Verschluss 32 verschlossen. Schließlich werden die Überwurfmuttern 18 angezogen. Das Kontaktmittel 14 steht unter Druck, so dass ein guter elektrischer Kontakt gewährleistet ist.

Das siebte Ausführungsbeispiel ist eine Abwandlung des sechsten Ausführungsbeispiels. Das Kontaktmittel 14 als Gesamtheit von elektrisch leitfähigen Kugeln, welche zwischen die Leiter 5 und den Kontaktkörper 12 einfüllbar ist, kann daher entsprechend für die anderen Ausführungsbeispiele und die jeweiligen Abwandlungen verwendet werden. Bei den Kabelsteckern 20 und Freiluft-Endverschlüssen kann die Querbohrung 12c entfallen, wenn das Kontaktmittel 14 stirnseitig (mittels der Längsbohrung 12d) in den Kontaktkörper 12 einfüllbar ist.

### Bezugszeichenliste

- 1: Kabelendgarnitur
- 3: Kabel
- 5: Leiter
- 7: Kabelisolierung
- 10: Klemmkörper
- 10a: erster Gewindeabschnitt
- 12: Kontaktkörper
- 12a: Kontaktabschnitt
- 12b: Mehrkant
- 12c: Querbohrung
- 12d: Längsbohrung
- 14: Kontaktmittel
- 14b: Federzunge
- 14c: Zahn
- 14f: Spiralfeder
- 14g: Trägerdraht
- 14h: Abstandhalter
- 15: zweiter Gewindeabschnitt
- 16: Befestigungsring
- 17: Federring
- 18: Überwurfmutter
- 20: Kabelstecker
- 21: Steckerkonus
- 22: Druckring
- 25: Presskonus
- 28: Schraube
- 30: Muffe
- 32: Verschluss

## Patentansprüche

1. Kabelendgarnitur (1) für ein Kabel (3), welches im Betrieb eine Mittelspannung oder Hochspannung führt und welches einen eine axiale Richtung definierenden Leiter (5) und eine Kabelisolation (7) zum Umschließen des Leiters (5) aufweist, wobei der Leiter (5) aus mehreren gegeneinander isolierten Adern besteht, mit
a) einem Klemmkörper (10), welcher den von der Kabelisolation (7) befreiten Endabschnitt des Leiters (5) radial umschließt und am Leiter (5) befestigt ist, wobei der Klemmkörper (10) ein Ausweichen der Adern des Leiters (5) in radialer Richtung bei der Befestigung der Kabelendgarnitur (1) am Kabel (3) verhindert,
b) einem Kontaktkörper (12), welcher mechanisch mit dem Klemmkörper (10) und elektrisch mit dem Leiter (5) verbunden ist,
**dadurch gekennzeichnet, dass**
c) der Kontaktkörper (12) die in axialer Richtung weisenden Stirnseiten der Adern des Leiters (5) unter Zwischenlage eines elektrisch leitfähigen Kontaktmittels (14) kontaktiert, um wenigstens mittelbar mit dem Leiter (5) in elektrischem Kontakt zu stehen, wobei
d) das Kontaktmittel (14) aus einer Gesamtheit von elektrisch leitfähigen Kugeln besteht, welche zwischen den Leiter (5) und den Kontaktkörper (12) einfüllbar sind.

2. Kabelendgarnitur nach Anspruch 1, **dadurch gekennzeichnet, dass** die mechanische Verbindung zwischen dem Klemmkörper (10) und dem Kontaktkörper (12) den nötigen Anpressdruck für die elektrische Verbindung zwischen den Adern des Leiters (5) und dem Kontaktmittel (14) sowie zwischen dem Kontaktmittel (14) und dem Kontaktkörper (12) erzeugt.

3. Kabelendgarnitur nach einem der vorhergehenden Ansprüche, **dadurch gekennzeichnet, dass** das zwischen dem Kontaktkörper (12) und den Stirnseiten der Adern des Leiters angeordnete Kontaktmittel (14) in eine Aufnahme des Kontaktkörpers (12) eingelegt oder eingefüllt ist.

4. Kabelendgarnitur nach Anspruch 3, **dadurch gekennzeichnet, dass** das Kontaktmittel (14) durch den Kontaktkörper (12), insbesondere durch eine Querborung (12c) und/oder eine Längsbohrung (12d), einfüllbar ist, um den Zwischenraum zwischen dem Boden der Aufnahme des Kontaktkörpers (12) und der Stirnseite des Leiters (5) auszufüllen.

5. Kabelendgarnitur nach einem der vorhergehenden Ansprüche, **dadurch gekennzeichnet, dass** ein Presskonus (25) vorgesehen ist, welcher auf dem Leiter (5) sitzt und auf welchen der einen Gegenkonus aufweisende Klemmkörper (10) gezogen oder geschoben ist, um eine mechanische Verbindung zwischen Leiter (5) und Klemmkörper (10) zu schaffen.

6. Kabelendgarnitur nach einem der vorhergehenden Ansprüche, **dadurch gekennzeichnet, dass** der Klemmkörper (10) als Schraubklemme ausgebildet und auf den von ihr umschlossenen Leiter (5) geklemmt ist, um eine mechanische Verbindung zwischen Leiter (5) und Klemmkörper (10) zu schaffen.

7. Kabelendgarnitur nach einem der vorhergehenden Ansprüche, **dadurch gekennzeichnet, dass** dem Klemmkörper (10) ein erster Gewindeabschnitt (10a) und dem Kontaktkörper (12) ein zweiter Gewindeabschnitt (15) zugeordnet ist, wobei die beiden Gewindeabschnitte (10a, 15) zur Herstellung einer mechanischen Verbindung zwischen dem Klemmkörper (10) und dem Kontaktkörper (12) miteinander verschraubt sind.

8. Kabelendgarnitur nach Anspruch 7, **dadurch gekennzeichnet, dass** der zweite Gewindeabschnitt (15) an einer Überwurfmutter (18) ausgebildet ist, welche auf dem Kontaktkörper (12) drehbar gelagert ist.

9. Kabelendgarnitur nach Anspruch 8, **dadurch gekennzeichnet, dass** die Überwurfmutter (18) mittels eines Befestigungsrings (16) verliersicher auf dem Kontaktkörper (12) angeordnet ist, wobei der Befestigungsring (16) auf den Kontaktkörper (12) insbesondere aufgeschraubt ist.

10. Kabelstecker (20) oder Freiluft-Endverschluss mit einer Kabelendgarnitur (1) nach einem der vorhergehenden Ansprüche.

11. Kabelstecker oder Freiluft-Endverschluss nach Anspruch 10, **dadurch gekennzeichnet, dass** der Kontaktkörper (12) einen radial nach außen weisenden Kontaktabschnitt (12a) zum Zusammenwirken mit einer Steckbuchse aufweist, und/oder dass der Kontaktkörper (12) einen Mehrkant (12b) zum Ansetzen eines Werkzeugs zum Verschrauben von Klemmkörper (10) und Kontaktkörper (12) aufweist.

12. Muffe (30) zum Verbinden zweier Kabel (3) mit zwei Kabelendgarnituren (1) nach einem der Ansprüche 1 bis 9, wobei der Kontaktkörper (12) gemeinsam ist.

## Claims

1. Cable fittings (1) for a cable (3) carrying medium voltage or high voltage in operation and having a conductor (5) defined in axial direction and a cable insulation (7) to encircle the conductor (5), while the conductor (5) comprises several cores which are insulated one from the other, with
a) a clamping part (10) radially encircling the end portion of the conductor (5) which is free from cable insulation (7) and which is fixed to the conductor (5), while the clamping part (10) prevents a deflection of the cores of the conductor (5) in radial direction during the fixing of the cable fittings (1) to the cable (3),
b) a contact body (12), mechanically connected with the clamping part (10) and electrically connected with the conductor (5),
**characterized in that**
c) the contact body (12) contacts the end faces of the cores of the conductor (5) pointing in axial direction by means of a layer of an electrically conductive contact means (14), in order to have at least an indirect electrical contact with the conductor (5), wherein
d) the contact means (14) consists of an entirety of electrically conductive balls, which can be filled between the conductor (5) and the contact body (12).

2. Cable fittings (1) as per claim 1, **characterized in that** the mechanical connection between the clamping part (10) and the contact body (12) generates the necessary contact pressure for the electrical connection between the cores of the conductor (5) and the contact means (14) and between the contact means (14) and the contact body (12).

3. Cable fittings (1) as per one of the above-mentioned claims, **characterized in that** the contact means (14) positioned between the contact body and the end faces of the cores of the conductor is inserted or filled in a compartment of the contact body (12).

4. Cable fittings (1) as per claim 3, **characterized in that** the contact means (14) is fillable by means of the contact body (12), in particular by means of a cross-hole (12c) and/or a lengthwise-hole (12d), in order to infill the clearance between the bottom of the seat of the contact body (12) and the end face of conductor (5).

5. Cable fittings (1) as per one of the above-mentioned claims, **characterized in that** a pressing-cone (25) is provided being seated on the conductor (5) and on which the clamping part (10) comprising a counter-cone is pultruded or inserted, in order to establish a mechanical linkage between the conductor (5) and the clamping part (10).

6. Cable fittings (1) as per one of the above-mentioned claims, **characterized in that** the clamping part (10) is constructed as a screw-type terminal and clamped onto the conductor (5) enclosed by the screw-type terminal, in order to establish a mechanical linkage between the conductor (5) and the clamping part (10).

7. Cable fittings (1) as per one of the above-mentioned claims, **characterized in that** to the clamping part (10) a first threaded portion (10a) is correlated and to the clamping part (10) a second threaded portion (15) is correlated, wherein both the threaded portions (10a, 15) are screwed with each other for establishing a mechanical linkage between the clamping part (10) and the contact body (12).

8. Cable fittings (1) as per claim 7, **characterized in that** the second threaded portion (15) is constructed to a union nut (18), which is pivotably mounted on the contact body (12).

9. Cable fittings (1) as per claim 8, **characterized in that** the union nut (18) is captively arranged on the contact body (12) by means of a mounting ring (16), wherein the mounting ring (16) in particular is screwed onto contact body (12).

10. Cable plug (20) or outdoor sealing end with a cable fittings (1) as per one of the above-mentioned claims.

11. Cable plug (20) or outdoor sealing end as per claim 10, **characterized in that** the contact body (12) comprises a contact portion (12a) pointing radially outwards for working together with a socket, and/or that the contact body (12) comprises a polyhedron (12b) for applying a tool for screwing the clamping part (10) and the contact body (12).

12. Sleeve (30) for connecting two cables (3) with two cable fittings (1) as per one of claims 1 to 9, wherein the contact body (12) is common.

## Revendications

1. Garniture d'extrémité de câble (1) pour un câble (3), qui conduit en fonctionnement une tension moyenne ou une haute tension et qui présente un conducteur (5) définissant une direction axiale et une isolation de câble (7) pour entourer le conducteur (5), dans laquelle le conducteur (5) est constitué de plusieurs fils isolés l'un de l'autre, avec
a) un corps de serrage (10), qui entoure radialement la section d'extrémité du conducteur (5) dépourvue de l'isolation de câble (7) et est fixé au conducteur (5), dans laquelle le corps de serrage (10) empêche une déviation des fils du conducteur (5) dans la direction radiale lors de la fixation de la garniture d'extrémité de câble (1) sur le câble (3),
b) un corps de contact (12), qui est relié mécaniquement au corps de serrage (10) et électriquement au conducteur (5),
**caractérisée en ce que**
c) le corps de contact (12) entre en contact avec les côtés frontaux dirigés dans la direction axiale des fils du conducteur (5) avec interposition d'un moyen de contact électriquement conducteur (14) pour être en contact électrique au moins indirectement avec le conducteur (5), dans laquelle
d) le moyen de contact (14) est constitué d'un ensemble de billes électriquement conductrices, qui peuvent être remplies entre le conducteur (5) et le corps de contact (12).

2. Garniture d'extrémité de câble selon la revendication 1, **caractérisée en ce que** la liaison mécanique entre le corps de serrage (10) et le corps de contact (12) génère la pression de contact nécessaire pour la liaison électrique entre les fils du conducteur (5) et le moyen de contact (14) ainsi qu'entre le moyen de contact (14) et le corps de contact (12).

3. Garniture d'extrémité de câble selon l'une quelconque des revendications précédentes, **caractérisée en ce que** le moyen de contact (14) agencé entre le corps de contact (12) et les côtés frontaux des fils du conducteur est inséré ou rempli dans un logement du corps de contact (12).

4. Garniture d'extrémité de câble selon la revendication 3, **caractérisée en ce que** le moyen de contact (14) peut être rempli par le corps de contact (12), en particulier par un alésage transversal (12c) et/ou un alésage longitudinal (12d), pour combler l'espace intermédiaire entre le fond du logement du corps de contact (12) et le côté frontal du conducteur (5).

5. Garniture d'extrémité de câble selon l'une quelconque des revendications précédentes, **caractérisée en ce qu'**un cône de pression (25) est prévu, qui est monté sur le conducteur (5) et sur lequel le corps de serrage (10) présentant un contre-cône est tiré ou poussé pour créer une liaison mécanique entre le conducteur (5) et le corps de serrage (10).

6. Garniture d'extrémité de câble selon l'une quelconque des revendications précédentes, **caractérisée en ce que** le corps de serrage (10) est réalisé en tant que borne à vis et est serré sur le conducteur (5) qu'elle entoure pour créer une liaison mécanique entre le conducteur (5) et le corps de serrage (10).

7. Garniture d'extrémité de câble selon l'une quelconque des revendications précédentes, **caractérisée en ce qu'**une première section de filetage (10a) est associée au corps de serrage (10) et une deuxième section de filetage (15) est associée au corps de contact (12), dans laquelle les deux sections de filetage (10a, 15) sont vissées l'une à l'autre pour l'établissement d'une liaison mécanique entre le corps de serrage (10) et le corps de contact (12).

8. Garniture d'extrémité de câble selon la revendication 7, **caractérisée en ce que** la deuxième section de filetage (15) est réalisée au niveau d'un écrou-raccord (18), qui est monté en rotation sur le corps de contact (12).

9. Garniture d'extrémité de câble selon la revendication 8, **caractérisée en ce que** l'écrou-raccord (18) est agencé de manière imperdable sur le corps de contact (12) au moyen d'une bague de fixation (16), dans laquelle la bague de fixation (16) est en particulier vissée sur le corps de contact (12).

10. Fiche de câble (20) ou extrémité d'extérieur avec une garniture d'extrémité de câble (1) selon l'une quelconque des revendications précédentes.

11. Fiche de câble ou extrémité d'extérieur selon la revendication 10, **caractérisée en ce que** le corps de contact (12) présente une section de contact (12a) dirigée radialement vers l'extérieur pour la coopération avec une douille femelle, et/ou que le corps de contact (12) présente un polygone (12b) pour l'application d'un outil pour le vissage du corps de serrage (10) et du corps de contact (12).

12. Manchon (30) pour la liaison de deux câbles (3) avec deux garnitures d'extrémité de câble (1) selon l'une quelconque des revendications 1 à 9, dans lequel le corps de contact (12) est en commun.
